# EUROPÄISCHE PATENTSCHRIFT

(11) **EP 2 780 405 B1**
(45) Veröffentlichungstag und Bekanntmachung des Hinweises auf die Patenterteilung: **13.04.2016**
(21) Anmeldenummer: 12799511.6
(22) Anmeldetag: 14.11.2012
(51) Int. Cl.: C08L 61/14, C08G 8/10, C08G 8/34, C08J 9/00, C08J 9/14

(54) **SCHAUMSTOFF AUF DER BASIS VON PHENOLHARZEN**
FOAM MATERIAL ON THE BASIS ON PHENOLIC RESIN
MATÉRIAU EXPANSÉ À BASE DE RÉSINES PHÉNOLIQUES

(30) Priorität: 18.11.2011 DE 102011118821
(43) Veröffentlichungstag der Anmeldung: 24.09.2014
(73) Patentinhaber: Hexion GmbH, 58642 Iserlohn-Letmathe (DE)
(72) Erfinder: DAHLHAUS, Daniel, 46359 Heiden (DE); KUHLMANN, Gunda, 59077 Hamm (DE); BÖLKE, Rosel, 58313 Herdecke (DE)
(74) Vertreter: Palinsky, Kathrin
(86) Internationale Anmeldenummer: PCT/EP2012/004731
(87) Internationale Veröffentlichungsnummer: WO 2013/072047

(56) Entgegenhaltungen:
- DATABASE WPI Week 201210 Thomson Scientific, London, GB; AN 2011-P35044 XP002693633, & CN 102 220 145 A (SONG Y) 19. Oktober 2011 (2011-10-19)

## Beschreibung

Die vorliegende Erfindung betrifft einen Schaumstoff auf der Basis von Phenolharzen und dessen Verwendung.

Schaumstoffe auf der Basis von Phenolharzen finden im wesentlichen Anwendung als Abdichtung und Dämmstoff im Baubereich und im Berg- und Tunnelbau. In der Regel werden sie auf Basis wässriger Resole gefertigt, die mittels eines Treibmittels und eines Härters mit oder ohne Wärmezufuhr zu einem Phenolharzschaum verarbeitet werden.

DE 3 718 724 beschreibt den allgemeinen Prozess zur Herstellung von Phenolharzschäumen, bei dem zunächst ein Phenol-Formaldehyd-Harz mit einem Treibmittel, einem Emulgator und einem Härter, entweder einer anorganischen oder starken organischen Säure, vermischt wird. Die Auswahl der Säure hängt von der gewünschten Aushärtezeit und Temperatur ab. Als Treibmittel finden üblicherweise halogenierte und nichthalogenierte aliphatische Kohlenwasserstoffe Verwendung.

Die CN 102220145 offenbart ein Verfahren zur Herstellung von Phenolharzschäumen, bei dem zunächst ein Präpolymer durch Kondensation von Phenol und Formaldehyd hergestellt wird. Das Präpolymer wird dann mit einem Aluminium-Lignin vermischt und nach Zugabe von oberflächenaktiven Mitteln, Treibmittel und Härter zu einem Hartschaum ausgehärtet.

Die Aufgabe der hier vorliegenden Erfindung besteht darin, einen biobasierten duroplastischen Schaumstoff mit verbesserten Eigenschaften, insbesondere verbesserten Flammschutzeigenschaften, bei im Wesentlichen unveränderten Schaumeigenschaften, bereitzustellen.

Gelöst wir diese Aufgabe erfindungsgemäß dadurch, dass der Schaumstoff durch zumindest folgende Schritte hergestellt wird:
a) Herstellung eines Prepolymers durch Kondensation zumindest einer phenolischen Verbindung und Formaldehyd in einem Verhältnis von 1 : 1,0 bis 1 : 3,0 unter Zuhilfenahme von 0,15 bis 5 Gew% bezogen auf die Menge der eingesetzten Rohstoffe eines basischen Katalysators im Temperaturbereich von 50 bis 100 °C bis der Brechungsindex der Reaktionsmischung 1,4990 bis 1,5020 beträgt und anschließend
b) Zugabe von 5 bis 40 Gew% bezogen auf die Menge der eingesetzten Rohstoffe zumindest eines natürlichen Polyphenols bei einer Temperatur von 50 bis 100 °C,
c) Zugabe von 2 bis 10 Gew% bezogen auf die Menge der eingesetzten Rohstoffe eines oder mehrerer Emulgatoren und Mischungen hieraus,
d) Zugabe von 2 bis 10 Gew% bezogen auf die Menge der eingesetzten Rohstoffe eines oder mehrerer Treibmittel und Mischungen hieraus und
e) Zugabe von 10 bis 20 Gew% bezogen auf die Menge der eingesetzten Rohstoffe eines Härters und
f) Aushärtung.

Das Schaumharz wird durch eine spezielle Art der Kondensationsreaktion von Phenol, Formaldehyd und einem oder mehreren nachwachsenden Rohstoffen aus der Gruppe der natürlichen Phenole in Gegenwart eines basischen Katalysators erhalten (Schritte a und b). Ein aus diesem bio-basierten Harz hergestellter Schaumstoff (Schritte c bis e) zeigt deutlich verbesserte Flammschutzeigenschaften, wobei andere Schaumstoffeigenschaften, wie z. B. Wärmeleitfähigkeit, Abriebfestigkeit, Geschlossenzelligkeit und Druckfestigkeit im Wesentlichen unverändert bleiben und ist somit bestens geeignet für die Anwendungen zum Schutz gegen Brand, Wärme, Kälte und Schall.

Die Herstellung des Prepolymers erfolgt in der Art, dass zumindest eine phenolische Verbindung z. B. ausgewählt aus einem Phenol und/oder Kresol, wobei bevorzugt aufgrund der einfachen Zugänglichkeit Phenol ist, und Formaldehyd in einem Verhältnis von 1 : 1,0 bis 1 : 3,0 auf herkömmliche Art und Weise kondensiert werden. Bevorzugt ist ein Verhältnis von 1 : 1,5 bis 1 : 2,5, da dann das Verhältnis von freiem Formaldehyd zu Phenol optimal ausgewogen ist und der Monomergehalt im Endprodukt minimiert wird. Die Kondensation erfolgt unter Einwirkung von 0,15 bis 5 Gew% bezogen auf die Menge der eingesetzten Rohstoffe eines basischen Katalysators (z. B. KOH, NaOH, Ba(OH)₂, Triethylamin) bevorzugt 0,3 bis 1,5 Gew%. Die Zugabe von Formaldehyd erfolgt im Temperaturbereich von 50 bis 100°C, in einem Zeitraum von 30 bis 150 min. Bevorzugt sind Temperaturen zwischen 75 und 85 °C in einem Zeitraum von 50 bis 70 min, wodurch eine optimale Exothermiekontrolle der Reaktion gegeben ist. Die Kondensationsreaktion wird so eingestellt, dass der Brechungsindex der Reaktionsmischung 1,4990 bis 1,5020, bevorzugt 1,4995 bis 1,5015, beträgt. Der Brechungsindex ist ein Maß für den Kondensationsgrad. Gemessen wird der Brechungsindex mittels Abbe-Refraktometer bei 25 °C nach DIN 51423-2. Bevorzugt ist, wenn der Gehalt an freien Phenol bereits dann < 10 % beträgt, damit im Endprodukt möglichst wenig freies Phenol vorhanden ist.

Nach erfolgter Reaktion der phenolischen Verbindung und Formaldehyd werden 5 bis 40 Gew% bezogen auf die Menge der eingesetzten Rohstoffe zumindest eines natürlichen Polyphenols ausgewählt aus Cashew-Nussschalen-Öl (CNSL, Cashew Nut Shell Liquid), Kohlenhydraten, Tannin (z.B. Quebracho-Tannin) und deren Derivate und/oder Lignin und deren Derivate (z.B. Na-Ligininsulfonat) zugegeben. 5 bis 20 Gew% an CNSL-, Tannin- und/oder Ligninverbindungen sind besonders von Vorteil, da dadurch die Flammschutzeigenschaften im fertigen Schaumstoff noch deutlicher verbessert werden konnte, was zu einem verbreiterten Einsatz des Produktes führt. Zudem sind CNSL-, Tannin- und/oder Ligninverbindungen natürlich nachwachsende Rohstoffe und leisten somit einen Beitrag zur umweltbewussten Bereitstellung des Produktes. Das natürliche Polyphenol wird bei einer Temperatur von 50 bis 100°C, bevorzugt 75 bis 85°C, in einer Zeit von 90 bis 210 min, bevorzugt 120 bis 180 min, zugegeben.

Von Vorteil, jedoch nicht Bedingung, wäre eine anschließende Abkühlung auf 40 bis 70 °C und eine Destillation unter vermindertem Druck bis zu einem Wassergehalt von 7 bis 20 %, so dass eine Viskosität des biobasierten Schaumharzes von 2000 bis 14000 mPas erreicht wird, die eine optimale Weiterverarbeitung ermöglicht.

Das Produkt aus den Schritten a) und b) kann bei niedrigen Temperaturen gelagert und bedarfsgerecht eingesetzt werden.

Im Schritt c) wird in das in den Schritten a) und b) hergestellte erfindungsgemäße Schaumharz auf der Basis von nachwachsenden Rohstoffen 2 bis 10 Gew% bezogen auf die Menge der eingesetzten Rohstoffe eines oder mehrerer Emulgatoren eingemischt. Bevorzugt wird eine Menge an 4 bis 8 Gew% verwendet. Bei Mengen < 4 Gew% und > 8 Gew% findet keine homogene Vermischung, sondern eine teilweise Entmischung der in den Schritten d) bis e) zugegebenen Zusatzstoffe statt. Die Emulgatoren können ausgewählt sein aus Adukten des Ethylenoxids und/oder Propylenoxids an gesättigten und ungesättigten Fettsäuren, Hydroxyfettsäuren, Fettalkohole, Glyceride oder Pflanzenöle und/oder Dimethylphthalat, Diethylenglykol, Phthalsäureanhydrid und/oder Mischungen hieraus. Eingemischt wird der Emulgator bzw. die Mischung mehrerer Emulgatoren bei einer Temperatur von 20 bis 30 °C.

Anschließend wird im Schritt d) eine oder mehrere Treibmittel und/oder Mischungen hieraus in der Konzentration von 2 bis 10 Gew%, bevorzugt 3 bis 8 Gew%, bezogen auf die Menge der eingesetzten Rohstoffe, zugemischt. Ist die Konzentration des Treibmittels < 2 Gew% findet keine Schäumung des Harzes statt. Bei einer Menge des Treibmittels von > 10 Gew% wird der Druck in der Form während des Aushärtens zu groß und der Schaum kollabiert. Das Treibmittel wird dem Schaumharz bei einer Temperatur von 15 bis 25°C eingemischt. Als Treibmittel kommen aus dem Stand der Technik übliche Substanzen zum Einsatz wie z. B. Isopropylchlorid, Isopentan, Cyclopentan, Butan, Pentan, Hexan und/oder Heptan und/oder Mischungen hieraus.

Durch das Einmischen von 10 bis 20 Gew. % bezogen auf die Menge der eingesetzten Rohstoffe eines oder mehrerer Härter (z.B. anorganische oder organische Säuren wie z. B. Phosphorsäure, Schwefelsäure, Phenolsulfonsäuren, p-Toluolsulfonsäure, Xylolsulfonsäure) im Schritt e) und Einbringen der Mischung in eine Form wird der erfindungsgemäße Schaumstoff bei Temperaturen von 40 bis 70 °C wie gewohnt ausgehärtet (Schritt f).

Generell ist es möglich, dass in den Schritten a) bis e) weitere Zusatzstoffe wie Flammschutzmittel, Verarbeitungshilfsmittel, Weichmacher, Neutralisationsreagenzien oder reaktivitätsbeeinflussende Additive zugemischt werden.

Anhand eines Ausführungsbeispiels soll die Erfindung näher erläutert werden:

### Beispiel 1- erfindungsgemäBes Beispiel Schaumharz 1)

In einem Laborreaktor mit Rührer wurden 100 g Phenol mit 109,2 g Formaldehyd (45%-ig) und 1,2 g NaOH (50%-ig) vermischt. Diese Lösung wird auf 80 °C erwärmt und bis zu einem Brechungsindex von 1,5002 und einem Gehalt an freiem Phenol <10% kondensiert.
Nach Abkühlung werden 20 g Organosolv-Lignin zugegeben und das Gemisch bei einer Temperatur von ca. 80 °C bis zu einem Gehalt an freiem Phenol von <7,5 % gehalten. Anschließend erfolgt eine Destillation unter vermindertem Druck bis zu einem Wassergehalt von 15,7 °/.

### Beispiel 2 - erfindungsgemäßes Beispiel (Schaumstoff 1)

Zu 542 g Schaumharz 1 wurden unter Rühren nacheinander 23 g ethoxyliertes Rizinusöl, 25 g Dimethylphthalat und 59 g Treibmittelmischung, bestehend aus 85 Ges0/0 Isopentan und 15 Gew% Cyclopentan, gegeben. Zum Schluss wurden 118 g Härter, bestehend aus 80 Gew% Phenolsulfonsäure und 20 Gew% Phosphorsäure (75%-ig) eingerührt.
Das Reaktionsgemisch wurde unverzüglich in eine auf 60 °C vorgewärmte Holzform überführt, die mit einem Holzdeckel verschlossen und fest verschraubt wurde. Die Form wurde in einen auf 60 °C temperierten Wärmeschrank gestellt. Nach einer Stunde war der Schäumungsprozess beendet und der Schaumstoff konnte entformt werden. Anschließend erfolgte eine Nachhärtung des Schaumstoffes im Wärmeschrank bei 60 °C für 24 Stunden.

Der Schaumstoff weist folgende Eigenschaften auf:
Dichte = 36,2 kg/m³
λ = 35,9 mW/m*K
Geschlossenzelligkeit = 93,5 %
Flammeigenschaften: selbstlöschend und nichtrauchend
   Abplatzrate: 1,0 % / 4:00 min

### Beispiel 3 - erfindungsgemäßes Beispiel (Schaumharz 2)

Beispiel 1 wurde komplett wiederholt, mit der Ausnahme, dass das Organosolv-Lignin gegen pyrolytisches Lignin ausgetauscht wurde.

### Beispiel 4 - erfindungsgemäßes Beispiel (Schaumstoff 2)

Das Schäumen des Harzes 4 erfolgte identisch der Formulierung aus Beispiel 2. Der Schaumstoff weist folgende Eigenschaften auf:
Dichte = 47,5 kg/m³
λ = 25,4 mW/m*K
Geschlossenzelligkeit = 95,2 %
Flammeigenschaften: selbstlöschend und nichtrauchend
   Abplatzrate: 0,1 %

### Beispiel 5 - Vergleichsbeispiel (Schaumharz 3)

In einem Laborreaktor mit Rührer wurden 100 g Phenol mit 109,2 g Formaldehyd (45%-ig) und 1,2 g NaOH (50%-ig) vermischt. Diese Lösung wird auf 80 °C erwärmt und bis zu einem Brechungsindex von 1,5476.

Anschließend erfolgt eine Destillation unter vermindertem Druck bis zu einem Wassergehalt von 17,3 %.

### Beispiel 6 - Vergleichsbeispiel (Schaumstoff 3)

Das Schäumen des Harzes 4 erfolgte identisch der Formulierung aus Beispiel 2. Der Schaumstoff weist folgende Eigenschaften auf:
Dichte = 42,2 kg/m³
λ = 23,0 mW/m*K
Geschlossenzelligkeit = 100,0 %
Flammeigenschaften: selbstlöschend und nichtrauchend
   Abplatzrate: 14,2 % / 3:20 min

Die Flammeneigenschaften in den Beispielen wurden reproduzierbar mittels einer internen Meßmethode überprüft. Hierzu wurden die Proben angezündet und die Zeit gemessen in der die Flamme durchschlägt bzw. Teile der Probe abplatzen.

Zusammenfassend kann festgestellt werden, dass durch die Verwendung des erfindungsgemäßen Produktes die Flammschutzeigenschaften deutlich verbessert werden konnte. Dies war nicht zu erwarten, da aus dem Stand der Technik bekannte Zusammensetzungen (Beispiele 5 und 6) eine eindeutig schlechtere Abplatzrate zeigten. Die Eigenschaften hinsichtlich der Isolationseigenschaften bei den erfindungsgemäßen Beispielen sind vergleichbar mit denen aus dem Stand der Technik.

## Patentansprüche

1. Schaumstoff hergestellt durch zumindest folgende Schritte:
a) Herstellung eines Prepolymers durch Kondensation zumindest einer phenolischen Verbindung und Formaldehyd in einem Verhältnis von 1 : 1,0 bis 1 : 3,0 unter Zuhilfenahme von 0,15 bis 5 Gew% bezogen auf die Menge der eingesetzten Rohstoffe eines basischen Katalysators im Temperaturbereich von 50 bis 100 °C bis der Brechungsindex der Reaktionsmischung 1,4990 bis 1,5020 beträgt und anschließend
b) Zugabe von 5 bis 40 Gew% bezogen auf die Menge der eingesetzten Rohstoffe zumindest eines natürlichen Polyphenols bei einer Temperatur von 50 bis 100 °C,
c) Zugabe von 2 bis 10 Gew% bezogen auf die Menge der eingesetzten Rohstoffe eines oder mehrerer Emulgatoren und Mischungen hieraus,
d) Zugabe von 2 bis 10 Gew% bezogen auf die Menge der eingesetzten Rohstoffe eines oder mehrerer Treibmittel und Mischungen hieraus und
e) Zugabe von 10 bis 20 Gew% bezogen auf die Menge der eingesetzten Rohstoffe eines Härters und
f) Aushärtung.

2. Schaumstoff nach Anspruch 1, **dadurch gekennzeichnet dass** das Verhältnis einer phenolischen Verbindung und Formaldehyd in einem Verhältnis von 1 : 1,5 bis 1: 2,5 beträgt.

3. Schaumstoff nach Anspruch 1 und/oder 2, **dadurch gekennzeichnet, dass** der freie Phenolgehalts des im Schritt a) hergestellten Prepolymers < 10 % beträgt.

4. Schaumstoff nach zumindest einem der vorhergehenden Ansprüche, **dadurch gekennzeichnet, dass** der Brechungsindex 1,4995 -1,5015 beträgt.

5. Schaumstoff nach zumindest einem der vorhergehenden Ansprüche, **dadurch gekennzeichnet, dass** das natürliche Polyphenol ausgewählt ist aus einer Tannin- und/oder Ligninverbindung und/oder Cashew-Nussschalen-Öl.

6. Schaumstoff nach zumindest einem der vorhergehenden Ansprüche, **dadurch gekennzeichnet, dass** das natürliche Polymer in einer Konzentration von 5 bis 20 Gew% bezogen auf die Menge der eingesetzten Rohstoffe zugegeben wird.

7. Schaumstoff nach zumindest einem der vorhergehenden Ansprüche, **dadurch gekennzeichnet, dass** das natürliche Polyphenol bei einer Temperatur von 75 bis 85 °C zugegeben wird.

8. Schaumstoff nach zumindest einem der vorhergehenden Ansprüche, **dadurch gekennzeichnet, dass** der Emulgator ausgewählt ist aus Adukten des Ethylenoxids und/oder Propylenoxids an gesättigten und ungesättigten Fettsäuren, Hydroxyfettsäuren, Fettalkohole, Glyceride oder Pflanzenöle und/oder Dimethylphthalat, Diethylenglykol, Phthalsäureanhydrid und/oder Mischungen hieraus.

9. Schaumstoff, nach zumindest einem der vorhergehenden Ansprüche, **dadurch gekennzeichnet, dass** das Treibmittel ausgewählt ist aus Isopropylchlorid, Isopentan, Cyclopentan, Butan, Pentan, Hexan und/oder Heptan und/oder Mischungen hieraus.

10. Verwendung des Schaumstoffes nach zumindest einem der vorhergehenden Ansprüche für Dämm- und Isolationszwecke.

## Claims

1. Foam obtained by at least the steps of :
a) preparing a prepolymer by condensing at least one phenolic compound and formaldehyde in a ratio ranging from 1:1.0 to 1:3.0 under assistance of 0.15 to 5 wt% based on the amount of employed raw materials of a basic catalyst in the temperature range from 50 to 100°C until the refractive index of the reaction mixture is in the range from 1.4990 to 1.5020, and then
b) adding from 5 to 40 wt% based on the amount of employed raw materials of at least one natural Polyphenol at a temperature of 50 to 100°C,
c) adding from 2 to 10 wt% based on the amount of employed raw materials of one or more emulsifiers and mixtures thereof,
d) adding from 2 to 10 wt% based on the amount of employed raw materials of one or more blowing agents and mixtures thereof, and
e) adding from 10 to 20 wt% based on the amount of employed raw materials of a curative, and
f) cursing

2. Foam according to Claim 1, **characterized in that** the ratio of the at least one phenolic compound to formaldehyde is in the range from 1:1.5 to 1:2.5.

3. Foam according to Claim 1 and/or 2, **characterized in that** the free phenol content of the prepolymer obtained in step a) is < 10%.

4. Foam according to at least one preceding claim, **characterized in that** the refractive index is 1.4995 - 1.5015.

5. Foam according to at least one preceding claim, **characterized in that** the natural polyphenol is selected from a tannin and/or lignin compound and/or cashew nut shell liquid.

6. Foam according to at least one preceding claim, **characterized in that** the natural polymer is added in a concentration of 5 to 20 wt% based on the amount of employed raw materials.

7. Foam according to at least one preceding claim, **characterized in that** the natural polyphenol is added at a temperature of 20 to 30°C.

8. Foam according to at least one preceding claim, **characterized in that** the emulsifier is selected from adducts of ethylene oxide and/or of propylene oxide on saturated and unsaturated fatty acids, hydroxyfatty acids, fatty alcohols, glycerides or vegetable oils and/or dimethyl phthalate, diethylene glycol, phthalic anhydride and/or mixtures thereof.

9. Foam according to at least one preceding claim, **characterized in that** the blowing agent is selected from isopropyl chloride, isopentane, cyclopentane, butane, pentane, hexane and/or heptane and/or mixtures thereof.

10. Use of foam according to at least one preceding claim for insulating/insulation purposes.

## Revendications

1. Une mousse produite par au moins les étapes suivantes:
a) on prépare un pré-polymère par condensation d'au moins un composé phénolique et du formaldéhyde dans un rapport de 1: 1,0 à 1: 3,0, à l'aide de 0,15 à 5% en poids par rapport à la quantité de matière première utilisée d'un catalyseur basique dans la plage de température de 50 à 100 ° C jusqu'à ce que l'indice de réfraction du mélange de réaction est de 1,4990 à 1,5020, et
b) l'addition de 5 à 40% en poids par rapport à la quantité des matières premières utilisées au moins un polyphénol naturel à une température de 50 à 100 ° C,
c) l'addition de 2 à 10% en poids par rapport à la quantité des matières premières utilisées, une ou plusieurs émulsifiantes, et des mélanges de ceux-ci,
d) l'addition de 2 à 10% en poids par rapport à la quantité des matières premières utilisées d'un ou plusieurs agents gonflants, et des mélanges de ceux-ci, et
e) l'addition de 10 à 20% en poids par rapport à la quantité des matières premières utilisées et un durcisseur
f) faire durcir.

2. La mousse selon la revendication 1, **caractérisé en ce que** le rapport d'au moins un composé phénolique et du formaldéhyde est dans un rapport de 1: 1,5 à 1: 2,5.

3. la mousse selon la revendication 1 et / ou 2, **caractérisé en ce que** la teneur en phénol libre du pré-polymère préparé dans l'étape a) est <10%.

4. La mousse selon au moins l'une des revendications précédentes, **caractérisé en ce que** l'indice de réfraction est de 1,4995 à 1,5015.

5. La mousse selon au moins l'une des revendications précédentes, **caractérisé en ce que** le polyphénol naturel est choisi parmi un tanin et / ou de lignine et / ou de l'huile de noix de cajou.

6. La mousse selon au moins l'une des revendications précédentes, **caractérisé en ce que** le polymère naturel est ajouté en une concentration de 5 à 20% en poids par rapport à la quantité des matières premières utilisées.

7. La mousse selon l'une au moins des revendications précédentes, **caractérisé en ce que** le polyphénol naturel est ajouté à une température comprisse entre 20 et 30 ° C.

8. La mousse selon au moins l'une des revendications précédentes, **caractérisé en ce que** l'émulsifiant est choisi parmi les produits d'addition d'oxyde d'éthylène et / ou d'oxyde de propylène avec des acides gras saturés et insaturés, des acides gras hydroxylés, des alcools gras, des glycérides ou d'huiles végétales et / ou le diméthyle phtalate, le diéthylène glycol, d'anhydride phtalique et / ou leurs mélanges.

9. La mousse selon au moins l'une des revendications précédentes, **caractérisé en ce que** l'agent gonflant est choisi parmi le chlorure d'isopropyle, l'isopentane, le cyclopentane, le butane, le pentane, l'hexane et / ou l'heptane et / ou des mélanges de ceux-ci.

10. Utilisation de la mousse selon l'une au moins des revendications précédentes, destiné à des fins de calorifugeage et d'isolation.
